# EUROPÄISCHE PATENTSCHRIFT

(11) **EP 1 170 849 B1**
(45) Veröffentlichungstag und Bekanntmachung des Hinweises auf die Patenterteilung: **04.03.2009**
(21) Anmeldenummer: 01114362.5
(22) Anmeldetag: 13.06.2001
(51) Int. Cl.: H02J 13/00, H02J 9/02, H05B 37/02

(54) **Verfahren zur Steuerung und entsprechende Schaltungsanordnung**
Control method and corresponding circuit
Procédé de commande et circuit correspondant

(30) Priorität: 14.06.2000 DE 10029106
(43) Veröffentlichungstag der Anmeldung: 09.01.2002
(73) Patentinhaber: CEAG Notlichtsysteme GmbH, 59494 Soest (DE)
(72) Erfinder: Prasuhn, Jürgen, 59494 Soest (DE)
(74) Vertreter: Grünecker, Kinkeldey, Stockmair & Schwanhäusser Anwaltssozietät

(56) Entgegenhaltungen:
- EP-A- 0 430 836
- DE-A1- 19 814 366
- FR-A- 2 658 010
- US-A- 4 398 178

## Beschreibung

Die Erfindung betrifft ein Verfahren und eine entsprechende Schaltungsanordnung zur Durchführung des Verfahrens zur Steuerung wenigstens eines mit einer Steuereinrichtung über elektrische Versorgungsleitungen verbundenen elektrischen Verbraucher, wobei ein Steuersignal über die elektrischen Versorgungsleitungen an den elektrischen Verbraucher übertragen wird und die Steuereinrichtung zur Kodierung des Steuersignals eine an den Verbraucher über die Versorgungsleitung übertragene Versorgungsspannung unterbricht und/oder in ihrem Spannungswerte verändert.

Ein solches Verfahren und eine solche Vorrichtung sind aus der DE 198 14 366 bekannt. Vorbekanntes Verfahren und Vorrichtung dienen insbesondere zur Übertragung von Informationen an angeschlossene Verbraucher, wie beispielsweise Leuchten, durchin der Regel kurzzeitige, von einem Bitmuster abhängige Versorgungsspannungsänderungen. Solche Versorgungsspannungsänderungen sind sowohl Unterbrechungen der Versorgungsspannung als auch Änderungen der Spannungswerte, wie beispielsweise Änderung der Amplitude, Änderung des Effektivwertes oder dergleichen.

Bei dem vorbekannten Verfahren bzw. der vorbekannten Schaltungsanordnung war es bisher üblich, dass ein Schalten von Notleuchten in Zentral- und Gruppenversorgungsanlagen, insbesondere auch in Verbindung mit einer Allgemeinbeleuchtung, durch eine sogenannte Dauerlichtschalterabfrage erfolgte. Dadurch besteht die Möglichkeit, Leuchten der Allgemeinbeleuchtung und auch Stromkreise der Sicherheitsbeleuchtung im Netzbetrieb gemeinsam über vorhandene Lichtschalter zu schalten, wobei ein entsprechendes Bauteil zur Dauerlichtschalterabfrage eine entsprechende Anzahl von galvanisch getrennten Eingängen aufweist, über die entsprechende Lichtschalter abgefragt werden können. Die Verwendung einer solchen Dauerlichtschalterabfrage ist in Notlichtsystemen gemäß entsprechender Vorschriften notwendig, da es bis auf wenige Ausnahmen nicht erlaubt ist, in solchen Notlichtsystemen und insbesondere ein deren Endstromkreisen handelsübliche Lichtschalter einzusetzen, um bei vorhandenem Netz die Verbraucher und insbesondere Leuchten zu schalten. Ziel einer solchen Vorschrift ist, die Funktion und Verfügbarkeit der Notlichtfunktion bei Netzausfall sicherzustellen, was bei geöffnetem Lichtschalter nicht der Fall wäre.

Die Dauerlichtschalterabfrage benötigt zusätzliche Leitungen zu Lichtschaltern, um die entsprechenden Kontaktspannungen abzufragen, und sie stellt eine logische Verknüpfung mit einem oder mehreren Endstromkreisen der Notlichtsystems her, deren Netz-Spannung dann abhängig von der Dauerlichtschalterstellung ein- oder ausgeschaltet wird.

Eine solche Anordnung erfordert einen hohen Installationsaufwand und zsätzliche Kosten für die Leitungen, die zur Überwachung der Kontaktspannung zwischen Notlichtsystem und den Lichtschaltern verlegt werden müssen.

Bei einer anderen aus der Praxis bekannten Lösung werden sogenannte Umschaltweichen verwendet, denen die Ausgangsspannung des Notlichtsystems und die geschaltete Netz-Spannung der Allgemeinbeleuchtung zugeführt wird. Sofern kein Netzausfall vorliegt, erfolgt die Versorgung der Leuchten über die geschaltete Netz-Spannung. Diese Lösung ist allerdings sicherheitstechnisch kritisch, da in der Regel die erforderlichen Luft- und Kriechstrecken /allpolige Trennung zwischen beiden Eingangsspannungen zwingend erforderlich) in entsprechenden Geräten nicht normgerecht realisiert werden können.

US 4,398,178 A offenbart kein Notbeleuchtungssystem noch eine Möglichkeit zur Initialisierung eines entsprechenden Senders in einer solchen Weise, dass in Reaktion ein Steuersignal übermittelt wird. Stattdessen sendet ein entsprechender Sender zuerst ein Signal und nur in Erwiderung darauf übermittelt ein Empfänger Daten an den Sender. Hier ist eindeutig eine Master-Slave-Beziehung beschrieben, da die Übermittlung der Steuersignale immer zuerst und von der übergeordneten Einheit zum elektrischen Verbraucher erfolgt.

FR 2 658 010 A offenbart eine Datenübermittlung von elektrischen Verbrauchern zur Zentraleinheit, ohne dass diese Datenübermittlung in Reaktion auf Steuersignale erfolgt oder eine Initialisierung von Steuersignalen bewirkt.

EP 0 430 836 A1 beschreibt eine Beleuchtung einer Landebahn ohne weitere Hinweise auf ein entsprechendes Notlichtsystem.

Der Erfindung liegt daher die Aufgabe zugrunde, Verfahren und Schaltungsanordnung der eingangs genannten Art dahingehend zu verbessern, dass mit reduziertem Installations- und Kostenaufwand alle sicherheitstechnischen Verordnungen, insbesondere für Notlichtsysteme erfüllt werden.

Diese Aufgabe wird durch die Merkmale des Patentanspruchs 1 gelöst.

Vorrichtungsmäßig ergibt sich insbesondere nach Patentanspruch 11, dass wenigstens eine Belastungsänderungseinrichtung zumindest einem Verbraucher zugeordnet und parallel zu diesem zwischen den Versorgungsleitungen verschaltet ist.

Wird die Belastungsänderungseinrichtung betätigt bzw. ausgelöst, fließt der Schaltstrom und durch das entsprechende Steuersignal erfolgt daraufhin eine Steuerung des Notlichtsystems, indem beispielsweise bei dem Verbraucher ein bestimmter Schaltvorgang ausgelöst wird. Vorrichtungsmäßig ist dabei die Belastungsänderungseinrichtung zwischen den Versorgungsleitungen verschaltet, so dass auch an dieser Einrichtung ständig die >Netzspannung anliegt, ohne dass durch Auslösen oder Betätigung der Belastungsänderungseinrichtung Verbraucher im Notlichtsystem so geschaltet sind, dass sie insbesondere bei Netzausfall nicht mehr verfügbar sind.

Um die Belastungsänderungseinrichtung wie einen üblichen Lichtschalter einsetzen zu können, kann diese insbesondere durch eine manuelle externe Betätigung ausgelöst werden. Nach Auslösung fließt der Schaltstrom, wird detektiert und ein entsprechendes Steuersignal zur Auslösung eines Schaltvorgangs wird übertragen.

Die externe und manuelle Auslösung kann dabei über ein Schaltelement, wie einen Taster oder Schalter durchgeführt werden.

Um das Steuerungsverfahren mit geringem konstruktiven Aufwand durchführen zu können, kann die Betätigungsänderungseinrichtung je nach ihrer Betätigung zwischen den Versorgungsleitungen eine elektrische Verbindung herstellen oder diese unterbrechen. Das bedeutet, dass durch die Belastungsänderungseinrichtung eine Unterbrechung des sicherheitsrelevanten Stromkreises für insbesondere ein Notlichtsystem nicht möglich ist, da diese zwischen den Versorgungsleitungen und parallel zu den elektrischen Verbrauchern geschaltet ist.

Um bei Betätigung der Belastungsänderungseinrichtung den Schaltstrom in einfacher Weise festzulegen, kann ein strombegrenzendes Bauelement der Belastungsänderungseinrichtung den Schaltstrom insbesondere variierbar bestimmen. Ein solches strombegrenzendes Bauteil ist beispielsweise ein Widerstand.

Durch entsprechende Wahl des Widerstandes kann für verschiedene Belastungsänderungseinrichtungen der Steuerstrom in seinem Wert variiert werden. Durch diese Variation ist eine Identifizierung der Belastungsänderungseinrichtung möglich.

Ein fließender Schaltstrom kann insbesondere im Zusammenhang mit einem handelsüblich extern betätigbaren Schalter dadurch erfolgen, dass durch Betätigen wenigstens ein Kontakt mindestens einmal schließt und nach Kontaktschließung der Schaltstrom fließt.

Dazu kann die Belastungsänderungseinrichtung eine Schaltsteuereinrichtung aufweisen, die in Abhängigkeit der Stellung eines ersten Schaltelements, d.h. beispielsweise des von außen zugänglichen, handelsüblichen Schalters, ein zweites Schaltelement verstellt und dadurch den Kontakt schließt. Die Verstellung des zweiten Schaltelements kann allerdings auch dadurch erfolgen, dass von der Steuereinrichtung oder einer dieser zugeordneten Umschalteinrichtungen ein entsprechendes Steuersignal an die Schaltsteuereinrichtung übermitteln wird und diese daraufhin das zweite Schaltelement verstellt. Das zweite Schaltelement kann dabei beispielsweise ein Relais, ein elektronischer Schalter oder dergleichen sein.

Neben der oben genannten Variation des Widerstandes als strombegrenzendem Bauelement kann eine weitere Identifizierung einer entsprechenden Belastungsänderungseinrichtung auch dadurch erfolgen, dass die Anzahl der Kontaktschließungen je nach Belastungsänderungseinrichtung variiert. Dadurch kann diese von der Steuer- oder Umschalteinrichtung identifiziert werden und die der entsprechenden Belastungsänderungseinrichtung zugeordneten Verbraucher werden entsprechend angesteuert.

Die Codierung und damit Identifizierung der Belastungsänderungseinrichtung kann durch Anzahl und/oder Höhe und/oder Dauer und/oder Form der Belastungsänderungen erfolgen.

Um nicht nur ein Notlichtsystem, sondern gleichzeitig auch eine Allgemeinbeleuchtung zu schalten, kann in Abhängigkeit der Betätigung der Belastungsänderungseinrichtung durch insbesondere ein entsprechendes Betätigungselement, wie einen Schalter oder dergleichen, wenigstens ein Ein/Aus-Kontakt zur Schaltung zumindest eines Verbrauchers, insbesondere Leuchte, geschaltet werden. Dadurch kann über die Belastungsänderungseinrichtung ein Ein- oder Ausschalten eines oder mehrerer Verbraucher einer Allgemeinbeleuchtung durch Betätigen des entsprechenden Schalters erfolgen und durch ein von der Steuereinrichtung der Belastungsänderungseinrichtung zugeführtes Steuersignal wird der Ein/Aus-Kontakt geschaltet und damit der entsprechende Verbraucher der Allgemeinbeleuchtung ein- bzw. ausgeschaltet.

Zur schaltungstechnischen Realisierung kann dazu der Schaltsteuereinrichtung ein drittes Schaltelement zur Schaltung wenigstens eines Allgemeinverbrauchers außerhalb eines Notlichtsystems zugeordnet sein.

Um Allgemeinbeleuchtung und Notlichtsystem spannungsmäßig dabei voneinander zu trennen, kann die Verbindung zwischen Schaltsteuereinrichtung und drittem Schaltelement über einen potentialgetrennten Kontakt erfolgen.

Eine entsprechende Codiereinrichtung zur Identifizierung der Belastungsänderungseinrichtung kann Teil der Schaltsteuereinrichtung sein, wobei durch diese Codiereinrichtung Höhe, Dauer, Anzahl und/oder Form des Schaltstroms bestimmbar ist.

Der Schaltstrom kann über die Versorgungsleitungen durch die Steuereinrichtung oder durch die der Steuereinrichtung zugeordnete Umschalteinrichtung erfasst werden, wobei eine dieser Einrichtungen eine entsprechende Strommesseinrichtung zur Messung des durch Schließen des ersten bzw. zweiten Schaltelements durch die Belastungsänderungseinrichtung fließenden Strom aufweist.

Die Belastungsänderungseinrichtung kann in verschiedener Weise aufgebaut sein. Eine kompakte und gut einbaubare Einrichtung ergibt sich, wenn beispielsweise die Belastungsänderungseinrichtung als Unterputz- oder Aufputzeinbaugruppe ausgebildet ist. Diese ist mit handelsüblichem Lichtschalter kombiniert.

Die Nachrüstbarkeit ist dadurch verbesserbar, dass beispielsweise die Belastungsänderungseinrichtung als separates Modul mit Anschluss für zumindest ein extern angeordnetes erstes oder drittes Schaltelement ausgebildet ist.

Es sei angemerkt, dass die erfindungsgemäße Schaltungsanordnung ebenfalls über eine Netzausfallversorgung, wie eine Batterie oder einen Batteriesatz, verfügen kann, um im Falle eines Netzausfalles die Notlichtfunktion sicherzustellen.

Im Folgenden wird ein vorteilhaftes Ausführungsbeispiel der Erfindung anhand der in der Zeichnung beigefügten Figur näher beschrieben.

Es zeigt:

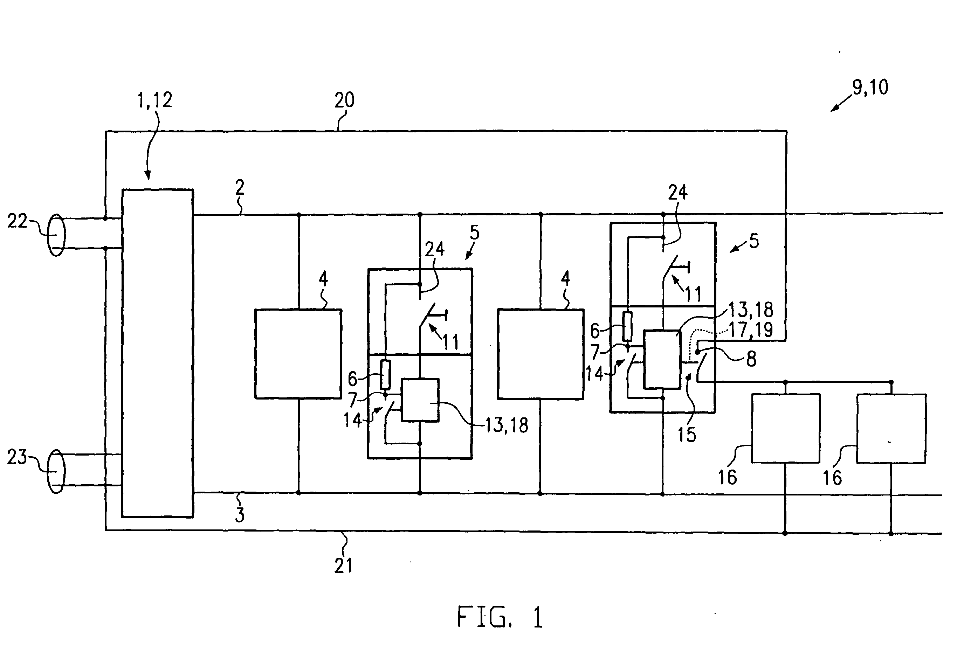

- Fig. 1: ein Prinzipschaltbild eines Ausführungsbeispiels einer erfindungsgemäßen Schaltungsanordnung.

Die Schaltungsanordnung 9 nach Fig. 1 weist eine Spannungsversorgung 22 zur Versorgung einer Anzahl von elektrischen Verbrauchern 4, 16 mit Wechselspannung und eine Spannungsquelle 23 zur Notlichtversorgung zumindest der Verbraucher 4 mittels Batterie oder Akkumulatoren auf. Die Spannungsversorgungen 22 und 23 sind mit einer Steuereinrichtung 1 verschaltet, die eine Umschalteinrichtung 12 umfasst oder der eine entsprechende Umschalteinrichtung 12 zugeordnet ist. Die Spannungsversorgung 22 ist über Versorgungsleitungen 20, 21 mit einer die Verbraucher 16 aufweisenden Allgemeinbeleuchtung verbunden. Von dieser Allgemeinbeleuchtung sind nur zwei Leuchten als Verbraucher 16 dargestellt, wobei ebenfalls eine höhere Anzahl von Leuchten und/oder andere elektrische Verbraucher Teil des Allgemeinbeleuchtungssystems sein können.

Von der Steuereinrichtung 1 gehen Versorgungsleitungen 2, 3 aus. An der Versorgungsleitung 2/3 liegt beispielsweise ein entsprechender Spannungswert U an. Der Spannungswert U ist eine Wechselspannung oder eine Gleichspannung und kann zur Übertragung von Information zwischen Steuereinrichtung 1 und elektrischen Verbrauchern 4 bzw. weiteren Verbraucher oder Systemen im Notlichtsystem 10 entsprechend zu einem Bitmuster variiert werden. Solche Variationen sind beispielsweise Versorgungsspannungsunterbrechungen, Veränderungen des Maximalwertes der Versorgungsspannung, Kombination dieser Änderungen oder auch andere Änderungen.

Zwischen den Versorgungsleitungen 2, 3 sind die elektrischen Verbraucher 4, wie beispielsweise Leuchten, sowie Belastungsänderungseinrichtungen 5 parallel zueinander verschaltet. Ein Beispiel für einen solchen elektrischen Verbraucher ist eine Notleuchte mit Darstellung eines Piktogramms zur Anzeige eines Fluchtwegs aus einem Gebäude. Jeder der elektrischen Verbraucher kann über entsprechende Einrichtungen verfügen, über die er von der Steuereinrichtung 1 mittels Variationen der Versorgungsspannung ansprechbar und schaltbar ist. Weiterhin kann auch eine Informationsübertragung vom elektrischen Verbraucher 4 zur Steuereinrichtung 1 erfolgen.

Die Belastungsänderungseinrichtungen sind als Schaltmodul mit integriertem ersten Schaltelement oder als Schaltmodul mit externem ersten Schaltelement 11 ausgebildet.

Bei einem Ausführungsbeispiel kann das erste Schaltelement 11 in Reihe mit einem strombegrenzenden Bauelement 6, wie beispielsweise einem Widerstand, in der Belastungsänderungseinrichtung 5 angeordnet sein. Bei dem Ausführungsbeispiel nach Fig. 1 ist in einer Belastungsänderungseinrichtung 5 das erste Schaltelement 11 als beispielsweise Taster ausgebildet. Bei Schließen des Tasters wird ein entsprechendes Signal an eine Schaltsteuereinrichtung 13 übermittelt, die daraufhin ein zweites Schaltelement 14 schließt, das bei dem Ausführungsbeispiel nach Fig. 1 in Reihe mit dem strombegrenzten Bauelement 6, wie einem Widerstand, verschaltet ist. Das zweite Schaltelement 14 kann beispielsweise ein Relais oder ein elektronischer Schalter sein, der Versorgungsleitung 3 mit einem Kontakt 7 verbindet. Je nach Ausbildung des strombegrenzenden Bauelements 6 ergibt sich ein entsprechender Stromwert, der von der Umschalteinrichtung 12 mit Hilfe einer entsprechenden Strommesseinrichtung detektierbar ist und daraufhin die Steuereinrichtung 1 des Notlichtsystems 10 veranlasst, eine entsprechende Steuerinformation codiert durch Variation der Versorgungsspannung an einen Verbraucher zur Auslösung entsprechender Schaltvorgänge zu übertragen.

Die Schaltsteuereinrichtung 13 weist weiterhin eine Codiereinrichtung 18 auf. Durch diese kann Anzahl und/oder Dauer und/oder Höhe und/oder Form der Belastungsänderung eingestellt werden.

Die weiter in Fig. 1 dargestellte Belastungsänderungseinrichtung 5 enthält als zusätzliches Bauteil ein drittes Schaltelement 15, das in den Versorgungsleitungen 20, 21 des Allgemeinbeleuchtungssystems angeordnet ist und im Öffnungszustand eine entsprechende Verbindung zu den Verbrauchern 16 unterbricht. Das dritte Schaltelement 15 kann ebenfalls als Relais, galvanisch getrennt angesteuerter elektronischer Schalter oder dergleichen ausgebildet sein. Insbesondere dient das Schaltelement zur Verbindung mit einem Ein/Aus-Kontakt 8, so dass durch Betätigen des dritten Schaltelements eine entsprechende Unterbrechung oder Verbindung der elektrischen Verbraucher 16 mit der Versorgungsleitung 20 und 21 erfolgt. Im Gegensatz dazu erfolgt eine solche Unterbrechung nicht durch erstes oder zweites Schaltelement 11, 14 bezüglich der weiteren elektrischen Verbraucher 4, da an diesen immer Spannung durch die Parallelschaltung von elektrischen Verbrauchern 4 und Belastungsänderungseinrichtung 5 anliegt.

Durch entsprechende Betätigung eines Schalters als Schaltelement 11 kann direkt über die Schaltsteuereinrichtung 13 oder auch durch entsprechende Übermittlung eines Steuersignals von der Steuereinrichtung 1 an die Schaltsteuereinrichtung 13 das dritte Schaltelement 15 zum Öffnen oder Schließen des Stromkreises für das Allgemeinbeleuchtungssystem betätigt werden.

Bei Notlichtsystem 10 und Allgemeinbeleuchtungssystem, siehe Verbraucher 16, kann die Verbindung 17 zwischen Schaltsteuereinrichtung 13 und dritten Schaltelement 15 über einen potential getrennten Kontakt 19 erfolgen, um diese Systeme galvanisch voneinander zu trennen.

Im Folgenden wird kurz die Funktion der erfindungsgemäßen Schaltungsanordnung 9 beschrieben.

Bei Betrieb der Schaltungsanordnung 9 mittels Spannungsversorgung 22 liegt die Netz-spannung an den angeschlossenen Verbrauchern 4 ständig an, auch wenn die Verbraucher durch entsprechende Steuersignale durch Steuereinrichtung 1 ausgeschaltet sind. Dies gilt analog für die Belastungsänderungseinrichtungen 5. Wird bei einer solchen Belastungsänderungseinrichtung 5 das erste Schaltelement 11 betätigt, fließt ein durch das strombegrenzende Bauelement 6 bestimmter Strom im Notlichtsystem 10, der von der Steuereinrichtung 1 bzw. der Umschalteinrichtung 12 detektiert wird. Nach Erfassung dieses Stroms veranlasst die Steuereinrichtung 1 durch Übermittlung eines entsprechenden Steuersignals an einen der Verbraucher einen entsprechenden Schaltvorgang.

Ein solcher Schaltvorgang kann beispielsweise das Ein- oder Ausschalten eines bestimmten Verbrauchers oder einer Gruppe von einer Belastungsänderungseinrichtung 5 zugeordneten Verbrauchern sein.

Die Belastungsänderungseinrichtung 5 weist weiterhin eine Schaltsteuereinrichtung 13 mit gegebenenfalls Codiereinrichtung 18 auf. Diese wird durch Betätigen des ersten Schaltelements 11 dazu veranlasst, einmal oder mehrmals das zweite Schaltelement 14 anzusteuern und dadurch eine entsprechende Belastungsänderung (Stromfluss) im Notlichtsystem zu verursachen, die, wie oben beschrieben, durch beispielsweise Umschalteinrichtung 12 erfasst wird. Entsprechend zu dieser Belastungsänderungseinrichtung wird dann ein Steuervorgang durch die Steuereinrichtung 1 ausgelöst.

Ist ein Allgemeinbeleuchtungssystem mit in die Schaltungsanordnung 9 einbezogen, kann die Schaltsteuereinrichtung 13 ein drittes Schaltelement 15, wie ein Relais oder dergleichen, betätigen, wodurch Verbraucher 16 des Allgemeinbeleuchtungssystems direkt durch die Schaltsteuereinrichtung 13 bzw. durch die Steuereinrichtung 1 geschaltet werden.

Um eine bestimmte Belastungsänderungseinrichtung 5 in einfacher Weise identifizieren zu können, kann mittels der Codiereinrichtung 18 Anzahl und/oder Höhe und/oder Dauer und/oder Form der Belastungsänderung beeinflusst werden. Die entsprechenden Charakteristika der Belastungsänderungseinrichtung sind ebenfalls durch Umschalteinrichtung 12 bzw. Steuereinrichtung 1 erfassbar und es erfolgt eine gezielte Ansteuerung der logisch der bestimmten Belastungsänderungseinrichtung 5 zugeordneten Verbraucher 4 bzw. 16.

Die Belastungsänderungseinrichtung 5 kann in unterschiedlicher Weise aufgebaut sein und gegebenenfalls nachgerüstet werden. Eine Möglichkeit des Aufbaus ist eine Baugruppe zum Unterputz- oder Aufputz-Einbau, in der beispielsweise ein Standard-Lichtschalter als erstes Schaltelement 11 integriert ist. Weiterhin kann die Belastungsänderungseinrichtung 5 als separates Modul ausgebildet sein, das mit einem extern angeordneten Schalter als erstem Schaltelement 11 verbindbar ist.

Dies gilt analog für insbesondere das dritte Schaltelement 15, das einen normalerweise eingesetzten Standard - Lichtschalter ersetzen kann, beziehungsweise parallel zu einem Standard - Lichtschalter geschaltet werden kann.

## Patentansprüche

1. Verfahren zur Steuerung wenigstens eines mit einer Steuereinrichtung (1) über elektrische Versorgungsleitungen (2, 3) verbundenen, elektrischen Verbraucher (4) in einem Notlichtsystem, wobei ein Steuersignal von der Steuereinrichtung über die elektrischen Versorgungsleitun- (1) gen (2, 3) an den elektrischen Verbraucher (4) übertragen wird und die Steuereinrichtung (1) zur Kodierung des Steuersignals eine an den Verbraucher (4) über die Versorgungsleitung (2, 3) übertragene Versorgungsspannung unterbricht und/oder in ihrem Spannungswert verändert,
**dadurch gekennzeichnet,**
**dass** durch Auslösen einer zumindest dem Verbraucher (4) parallel geschalteten Belastungsänderungseinrichtung (5) als Belastungsänderung ein Schaltstrom in den Versorgungsleitungen (2, 3) fließt und der Schaltstrom mit seinem entsprechenden Stromwert in der Steuereinrichtung detektiert und darauf hin in Abhängigkeit von dieser Detektion ein entsprechendes Steuersignal kodiert und an mindestens einen Verbraucher zur Auslösung entsprechender Schaltvorgänge übertragen wird

2. Verfahren zur Steuerung nach Anspruch 1, **dadurch gekennzeichnet, dass** die Belastungsänderungseinrichtung (5) insbesondere durch externe Betätigung ausgelöst wird.

3. Verfahren zur Steuerung nach Anspruch 1 oder 2, **dadurch gekennzeichnet, dass** die Belastungsänderungseinrichtung (5) je nach ihrer Betätigung zwischen den Versorgungsleitungen (2, 3) eine elektrische Verbindung herstellt oder diese unterbricht.

4. Verfahren zur Steuerung nach wenigstens einem der vorangehenden Ansprüche, **dadurch gekennzeichnet, dass** ein strombegrenzendes Bauelement (6) der Belastungsänderungseinrichtung (5) den Schaltstrom insbesondere variabel bestimmt.

5. Verfahren zur Steuerung nach wenigstens einem der vorangehenden Ansprüche, **dadurch gekennzeichnet, dass** bei Betätigen der Belastungsänderungseinrichtung (5) wenigstens ein Kontakt (7) mindestens einmal schließt und nach Kontaktschließung der Schaltstrom fließt.

6. Verfahren zur Steuerung nach wenigstens einem der vorangehenden Ansprüche, **dadurch gekennzeichnet, dass** die Anzahl der Kontaktschließungen je nach Belastungsänderungseinrichtung (5) variiert.

7. Verfahren zur Steuerung nach wenigstens einem der vorangehenden Ansprüche, **dadurch gekennzeichnet, dass** jede Belastungsänderungseinrichtung (5) über eine insbesondere variable Codierung durch die Steuereinrichtung (1) identifiziert wird.

8. Verfahren zur Steuerung nach wenigstens einem der vorangehenden Ansprüche, **dadurch gekennzeichnet, dass** die Codierung durch Anzahl und/oder Höhe und/oder Dauer und/oder Form der Belastungsänderungen erfolgt.

9. Verfahren zur Steuerung nach wenigstens einem der vorangehenden Ansprüche, **dadurch gekennzeichnet, dass** in Abhängigkeit der Betätigung der Belastungsänderungseinrichtung (5) wenigstens ein Ein/Aus-Kontakt (8) zur Schaltung zumindest eines Verbrauchers (4, 16), insbesondere Leuchte, geschaltet wird.

10. Verfahren zur Steuerung nach wenigstens einem der vorangehenden Ansprüche, **dadurch gekennzeichnet, dass** die Steuereinrichtung (1) den Ein/Aus-Kontakt (8) mittels der Steuersignale schaltet.

11. Schaltungsanordnung (9) für ein Notlichtsystem (10) zur Durchführung des Verfarens nach einem der vorangehendem Ansprüche, wobei die Schaltungsanordnung eine Steuereinrichtung (1) und wenigstens einen mit dieser über elektrische Verbindungsleitungen (2, 3) verbundenen elektrischen Verbraucher (4) aufweist, wobei die Versorgungsspannung zur Übertragung eines Steuersignals zwischen Steuereinrichtung (1) und Verbraucher unterbrechbar und/oder in ihrem Spannungswert veränderbar ist, und wobei wenigstens eine Belastungsänderungseinrichtung (5) zumindest einem Verbraucher (4) zugeordnet und parallel zu diesem zwischen den Versorgungsleitungen (2, 3) verschaltet ist.

12. Schaltungsanordnung nach Anspruch 11, **dadurch gekennzeichnet, dass** die Belastungsänderungseinrichtung (5) ein strombegrenzendes Bauelement (6) und ein insbesondere extern betätigbares, erstes Schaltelement (11) aufweist.

13. Schaltungsanordnung nach einem der Ansprüche 11 oder 12, **dadurch gekennzeichnet, dass** das Schaltelement (11) ein Taster oder Schalter ist.

14. Schaltungsanordnung nach wenigstens einem der Ansprüche 11 bis 13, **dadurch gekennzeichnet, dass** der Steuereinrichtung (1) eine Umschalteinrichtung (12) zugeordnet ist, die eine Strommesseinrichtung insbesondere zur Messung eines durch Schließen des ersten Schaltelements (11) durch die Belastungsänderungseinrichtung (5) fließenden Stroms als Belastungsänderung aufweist.

15. Schaltungsanordnung nach wenigstens einem der Ansprüche 11 bis 14, **dadurch gekennzeichnet, dass** Schaltelement (11,14) und strombegrenzendes Bauelement (6) in Reihe geschaltet sind.

16. Schaltungsanordnung nach wenigstens einem der Ansprüche 11 bis 15, **dadurch gekennzeichnet, dass** Steuersignale von der Steuereinrichtung (1) in Abhängigkeit von der Belastungsänderung ausgebbar sind.

17. Schaltungsanordnung nach einem der Ansprüche 11 bis 16, **dadurch gekennzeichnet, dass** die Belastungsänderung in Anzahl und/oder Größe und/oder Dauer und/oder Form variierbar ist.

18. Schaltungsanordnung nach wenigstens einem der Ansprüche 11 bis 17, **dadurch gekennzeichnet, dass** die Belastungsänderungseinrichtung (5) eine Schaltsteuereinrichtung (13) aufweist, die in Abhängigkeit der Stellung des ersten Schaltelements (11) und/oder in Abhängigkeit von der Umschalteinrichtung (12) oder Steuereinrichtung (1) übermittelter Steuersignale zur Verstellung zumindest eines zweiten Schaltelements (14) betätigbar ist.

19. Schaltungsanordnung nach wenigstens einem der Ansprüche 11 bis 18, **dadurch gekennzeichnet, dass** das zweite Schaltelement (14) ein Relais oder ein elektronischer Schalter ist.

20. Schaltungsanordnung nach wenigstens einem der Ansprüche 11 bis 19, **dadurch gekennzeichnet, dass** der Schaltsteuereinrichtung (13) ein drittes Schaltelement (15) zur Schaltung wenigstens eines Allgemeinverbrauchers (16) außerhalb eines Notlichtsystems (10) zugeordnet ist.

21. Schaltungsanordnung nach wenigstens einem der Ansprüche 11 bis 20, **dadurch gekennzeichnet, dass** die Verbindung zwischen Schaltsteuereinrichtung (13) und drittem Schaltelement (15) über einen potentialgetrennten Kontakt (19) erfolgt.

22. Schaltungsanordnung nach wenigstens einem der Ansprüche 11 bis 21, **dadurch gekennzeichnet, dass** die Belastungsänderungseinrichtung (5), insbesondere die Schaltsteuereinrichtung (13), eine Codiereinrichtung (18) zur Identifikation der Belastungsänderungseinrichtung (5) aufweist.

23. Schaltungsanordnung nach wenigstens einem der Ansprüche 11 bis 22, **dadurch gekennzeichnet, dass** die Belastungsänderungseinrichtung (5) als Unterputz- oder Aufputzeinbaubaugruppe ausgebildet ist.

24. Schaltungsanordnung nach wenigstens einem der Ansprüche 11 bis 23, **dadurch gekennzeichnet, dass** die Belastungsänderungseinrichtung (5) als separates Modul mit Anschluss für zumindest ein extern angeordnetes erstes und/oder drittes Schaltelement (11, 15) ausgebildet ist.

## Claims

1. Method for controlling at least one electricity consumer (4) connected via electricity supply leads (2, 3) to a control device (1) in an emergency lighting system, wherein a control signal from the control device is transmitted via the electricity supply leads (2, 3) to the electricity consumers (4) and for coding the control signal the control device (1) interrupts a supply voltage transmitted via the supply lead (2, 3) to the consumer (4) and/or alters its voltage value, **characterised in that** by triggering a load change device (5) connected in parallel at least to the consumer (4) a switching current flows in the supply leads (2, 3) as load change and the switching current with its corresponding current value in the control device is detected and thereupon as a function of this detection a corresponding control signal is coded and transmitted to at least one consumer for triggering corresponding switching operations.

2. Method for controlling according to claim 1, **characterised in that** the load change device (5) is triggered in particular by external actuation.

3. Method for controlling according to claim 1 or 2, **characterised in that** depending on its actuation the load change device (5) establishes an electrical connection between the supply leads (2, 3) or interrupts the latter.

4. Method for controlling according to at least one of the preceding claims, **characterised in that** a current limiting structural element (6) in the load change device (5) determines the switching current, in particular variably.

5. Method for controlling according to at least one of the preceding claims, **characterised in that** on actuation of the load change device (5) at least one contact (7) closes at least once and after making contact the switching current flows.

6. Method for controlling according to at least one of the preceding claims, **characterised in that** the number of contact closures varies according to the load change device (5).

7. Method for controlling according to at least one of the preceding claims, **characterised in that** each load change device (5) is identified by the control device (1) in particular by a variable coding.

8. Method for controlling according to at least one of the preceding claims, **characterised in that** coding ensues through the number and/or level and/or duration and/or form of the load changes.

9. Method for controlling according to at least one of the preceding claims, **characterised in that** as a function of the actuation of the load change device (5) at least one on/off contact (8) is switched for switching at least one consumer (4, 16), in particular a light.

10. Method for controlling according to at least one of the preceding claims, **characterised in that** the control device (1) switches the on/off contact (8) by means of the control signals.

11. Switching arrangement (9) for an emergency lighting system (10) for carrying out the method according to any of the preceding claims, wherein the switching arrangement comprises a control device (1) and at least one electricity consumer (4) connected to the latter via electric connecting leads (2, 3), wherein the supply voltage is interruptible and/or alterable in its voltage value for transmitting a control signal between the control device (1) and consumer, and wherein at least one load change device (5) is assigned to at least one consumer (4) and is connected in parallel to the latter between the supply leads (2, 3).

12. Switching arrangement according to claim 11, **characterised in that** the load change device (5) comprises a current limiting structural element (6) and a first switching element (11) which in particular is externally actuable.

13. Switching arrangement according to one of claims 11 or 12, **characterised in that** the switching element (11) is a key or switch.

14. Switching arrangement according to at least one of claims 11 to 13, **characterised in that** assigned to the control device (1) is a switchover device (12) which comprises a current measurement device in particular for measuring a current flowing through the load change device (5) due to closure of the first switching element (11).

15. Switching arrangement according to at least one of claims 11 to 14, **characterised in that** the switching element (11, 14) and current limiting structural element (6) are connected in series.

16. Switching arrangement according to at least one of claims 11 to 15, **characterised in that** control signals are issuable from the control device (1) as a function of the load change.

17. Switching arrangement according to any of claims 11 to 16, **characterised in that** the load change is variable in number and/or magnitude and/or duration and/or form.

18. Switching arrangement according to at least one of claims 11 to 17, **characterised in that** the load change device (5) comprises a switching control device (13) which is actuable as a function of the first switching element (11) and/or as a function of control signals transmitted by the switchover device (12) or control device (1) for adjusting at least one second switching element (14).

19. Switching arrangement according to at least one of claims 11 to 18, **characterised in that** the second switching element (14) is a relay or an electronic switch.

20. Switching arrangement according to at least one of claims 11 to 19, **characterised in that** assigned to the switching control device (13) is a third switching element (15) for switching at least one general consumer (16) outside an emergency lighting system (10).

21. Switching arrangement according to at least one of claims 11 to 20, **characterised in that** the connection between the switching control device (13) and the third switching element (15) ensues via a contact (19) of separate potential.

22. Switching arrangement according to at least one of claims 11 to 21, **characterised in that** the load change device (5), in particular the switching control device (13), comprises a coding device (18) for identifying the load change device (5).

23. Switching arrangement according to at least one of claims 11 to 22, **characterised in that** the load change device (5) is constructed as a concealed or surface-installed subassembly.

24. Switching arrangement according to at least one of claims 11 to 23, **characterised in that** the load change device (5) is constructed as a separate module with connection for at least one externally arranged first and/or third switching element (11, 15).

## Revendications

1. Procédé de commande d'au moins un consommateur électrique (4) relié à un dispositif de commande (1) par des lignes électriques d'alimentation (2, 3), dans un système lumineux de secours, dans lequel un signal de commande provenant du dispositif de commande est transmis au consommateur électrique (4) par les lignes électriques d'alimentation (2, 3) et le dispositif de commande (1) interrompt une tension d'alimentation transmise au consommateur (4) par la ligne d'alimentation (2, 3) et/ou en modifie la valeur afin de coder le signal de commande,
**caractérisé en ce que**
l'activation d'au moins une unité de changement de charge (5) connectée en parallèle au consommateur (4) entraîne le passage d'un courant de commutation représentant un changement de charge dans les lignes d'alimentation (2, 3) et le courant de commutation est détecté avec sa valeur de courant correspondante dans le dispositif de commande, à la suite de quoi un signal de commande correspondant est codé en fonction de cette détection et est transmis à au moins un consommateur en vue de l'activation d'opérations de commutation appropriées.

2. Procédé de commande selon la revendication 1, **caractérisé en ce que** l'unité de changement de charge (5) est notamment activée par actionnement externe.

3. Procédé de commande selon la revendication 1 ou 2, **caractérisé en ce que** l'unité de changement de charge (5) établit ou interrompt une liaison électrique entre les lignes d'alimentation (2, 3) en fonction de son actionnement.

4. Procédé de commande selon l'une au moins des revendications précédentes, **caractérisé en ce qu'**un composant limiteur de courant (6) de l'unité de changement de charge (5) détermine le courant de commutation de manière notamment variable.

5. Procédé de commande selon l'une au moins des revendications précédentes, **caractérisé en ce que** l'actionnement de l'unité de changement de charge (5) entraîne la fermeture au moins une fois d'au minimum un contact (7), laquelle fermeture de contact permet le passage du courant de commutation.

6. Procédé de commande selon l'une au moins des revendications précédentes, **caractérisé en ce que** le nombre des fermetures de contact varie suivant l'unité de changement de charge (5).

7. Procédé de commande selon l'une au moins des revendications précédentes, **caractérisé en ce que** chaque unité de changement de charge (5) est identifiée par le dispositif de commande (1) grâce à un codage notamment variable.

8. Procédé de commande selon l'une au moins des revendications précédentes, **caractérisé en ce que** le codage s'effectue par l'intermédiaire du nombre et/ou de la hauteur et/ou de la durée et/ou de la forme des changements de charge.

9. Procédé de commande selon l'une au moins des revendications précédentes, **caractérisé en ce que**, en fonction de l'actionnement de l'unité de changement de charge (5), au moins un contact marche/arrêt (8) est commuté pour entraîner la commutation d'au moins un consommateur (4, 16), notamment une lampe.

10. Procédé de commande selon l'une au moins des revendications précédentes, **caractérisé en ce que** le dispositif de commande (1) commute le contact marche/arrêt (8) au moyen des signaux de commande.

11. Circuit (9) destiné à un système lumineux de secours (10) apte à réaliser le procédé selon l'une au moins des revendications précédentes, dans lequel le circuit présente un dispositif de commande (1) et au moins un consommateur électrique (4) connecté à celui-ci par des lignes électriques d'alimentation (2, 3), la tension d'alimentation pouvant être interrompue et/ou modifiée dans sa valeur en vue de la transmission d'un signal de commande entre le dispositif de commande (1) et le consommateur, et au moins une unité de changement de charge (5) est associée à au moins un consommateur (4) et est branchée en parallèle à celui-ci entre les lignes d'alimentation (2, 3).

12. Circuit selon la revendication 11, **caractérisé en ce que** l'unité de changement de charge (5) présente un composant limiteur de courant (6) et un premier élément de commutation (11) actionnable notamment de manière externe.

13. Circuit selon l'une des revendications 11 ou 12, **caractérisé en ce que** l'élément de commutation (11) consiste en un interrupteur ou un commutateur.

14. Circuit selon l'une au moins des revendications 11 à 13, **caractérisé en ce qu'**un dispositif d'inversion (12) est associé au dispositif de commande (1) et présente un dispositif de mesure du courant, destiné notamment à la mesure d'un courant représentant un changement de charge et passant dans l'unité de changement de charge (5) sous l'effet de la fermeture du premier élément de commutation (11).

15. Circuit selon l'une au moins des revendications 11 à 14, **caractérisé en ce que** l'élément de commutation (11, 14) et le composant limiteur de courant (6) sont connectés en série.

16. Circuit selon l'une au moins des revendications 11 à 15, **caractérisé en ce que** des signaux de commande peuvent être émis par le dispositif de commande (1) en fonction du changement de charge.

17. Circuit selon l'une des revendications 11 à 16, **caractérisé en ce que** le changement de charge est variable en nombre et/ou en taille et/ou en durée et/ou en forme.

18. Circuit selon l'une au moins des revendications 11 à 17, **caractérisé en ce que** l'unité de changement de charge (5) présente un dispositif de commande de commutation (13) qui est actionnable en fonction de la position du premier élément de commutation (11) et/ou en fonction du dispositif d'inversion (12) ou du dispositif de commande (1) des signaux de commande transmis pour déplacer au moins un deuxième élément de commutation (14).

19. Circuit selon l'une au moins des revendications 11 à 18, **caractérisé en ce que** le deuxième élément de commutation (14) consiste en un relais ou un commutateur électronique.

20. Circuit selon l'une au moins des revendications 11 à 19, **caractérisé en ce qu'**un troisième élément de commutation (15) destiné à commuter au moins un consommateur général (16) en dehors d'un système lumineux de secours (10) est associé au dispositif de commande de commutation (13).

21. Circuit selon l'une au moins des revendications 11 à 20, **caractérisé en ce que** la liaison entre le dispositif de commande de commutation (13) et le troisième élément de commutation (15) s'effectue par l'intermédiaire d'un contact à séparation de potentiel (19).

22. Circuit selon l'une au moins des revendications 11 à 21, **caractérisé en ce que** l'unité de changement de charge (5), plus particulièrement le dispositif de commande de commutation (13), présente un dispositif de codage (18) destiné à l'identification de l'unité de changement de charge (5).

23. Circuit selon l'une au moins des revendications 11 à 22, **caractérisé en ce que** l'unité de changement de charge (5) est conçue sous la forme d'un ensemble pouvant être monté encastré ou en surface.

24. Circuit selon l'une au moins des revendications 11 à 23, **caractérisé en ce que** l'unité de changement de charge (5) est conçue sous la forme d'un module séparé présentant une connexion pour au moins un premier et/ou troisième élément de commutation (11, 15) positionné à l'extérieur.
